# DEMANDE DE BREVET EUROPEEN

(11) **EP 1 609 356 A1**
(43) Date de publication de la demande: **28.12.2005**
(21) Numéro de dépôt: 05105673.7
(22) Date de dépôt: 24.06.2005
(51) Int. Cl.: A01G 9/24, E05F 5/00, E05F 15/10, E05F 15/12, E05F 17/00

(54) **Dispositif de manoeuvre en ouverture et fermeture d'un volet d'aération d'un bâtiment intégrant un mécanisme de blocage.**

(30) Priorité: 25.06.2004 FR 0407019
(71) Demandeur: ETABLISSEMENT BARRE SAS, 47320 CLAIRAC (FR); Barre, Andrè, 47320 Clairac (FR)
(72) Inventeur: Barre, M. Andre', F-47320 Clairac (FR)
(74) Mandataire: Ravina, Bernard

(57) **Abrégé**

Le dispositif de manoeuvre d'un volet d'aération (1) d'un bâtiment comprend un arbre de commande (2), guidé en rotation par des paliers (3) et accouplé d'une part à un motoréducteur et d'autre part des transmissions (5) de mouvement solidaires du volet d'aération (1) lequel est articulé à la structure (4) du bâtiment. Ce dispositif présente des moyens de blocage (6) de l'arbre de commande (2), fixés à la structure (4). L'arbre (2) est monté de manière flottante par rapport à ses paliers (3) de façon à pouvoir être écarté radialement de ces derniers sous l'effet de l'effort de déplacement que lui imprime les transmissions de mouvement lorsque le volet (1) est sollicité par le vent dans le sens de l'ouverture, et ainsi venir par ce déplacement radial, en prise avec les moyens de blocage (6) de façon à être immobilisé en rotation par ce ou ces derniers.

## Description

### Domaine technique

La présente invention est relative à un dispositif de manoeuvre en ouverture et fermeture d'un volet d'aération d'un bâtiment à usage agricole par exemple une serre ou autre, intégrant un mécanisme de blocage.

### État de la technique

On sait que les serres à usage agricole doivent posséder au moins une ouverture d'aération pour notamment évacuer la chaleur emmagasinée. Cette ouverture d'aération est associée à un volet d'aération actionné en ouverture et fermeture par un dispositif de manoeuvre interne à la serre.

L'ouverture d'aération est habituellement formée entre deux éléments longitudinaux de l'ossature de la serre par exemple deux lisses horizontales, parallèles l'une à l'autre. Le volet, par son ossature, est classiquement articulé à la lisse supérieure.

Typiquement le dispositif de manoeuvre du volet d'aération d'une serre comprend un arbre cylindrique horizontal accouplé à un organe moteur et guidé en rotation dans des paliers fixes, et plusieurs transmissions de mouvement équiréparties, accouplées d'une part à l'arbre de commande et solidarisées d'autre part au volet d'aération.

Les différents paliers sont fixés à la structure de la serre par tout moyen connu.

Habituellement, chaque transmission de mouvement est du type réversible, c'est-à-dire qu'un effort imprimé sur le volet se traduit par l'entraînement de l'arbre en rotation. Pour éviter que le poids du volet ou que les efforts appliqués sur ce dernier, par exemple par le vent, ne deviennent moteur, l'arbre de commande est accouplé à l'organe moteur par l'intermédiaire d'un réducteur dont le rapport de transmission ou la constitution assure l'irréversibilité.

### Divulgation de l'invention

### Problème technique

Le volet en position ouverte en présence d'un vent de force relativement importante peut être soumis sur sa face extrados à une forte dépression sous l'effet de laquelle il est sollicité dans le sens de l'ouverture. L'effort appliqué au volet est transmis à chaque transmission de mouvement et génère au niveau de l'arbre de commande un moment de torsion. Le moment de torsion résultant se trouve alors appliqué sur l'arbre de sortie du réducteur. En raison de son irréversibilité, le réducteur s'oppose à la rotation de l'arbre et au mouvement du volet dans le sens de l'ouverture.

Il est apparu qu'en présence d'un vent de force importante la valeur du moment de torsion résultant peut être telle qu'elle conduit à la destruction de l'arbre par déformation permanente ou par rupture ou bien à la destruction du réducteur.

### Solution technique

La présente invention a pour objet de pallier l'inconvénient précédemment cité en utilisant l'effort résultant de la dépression générée par le vent sur l'extrados du volet pour assurer le blocage de l'arbre de commande en rotation en divers points de l'arbre distants les uns des autres.

À cet effet le dispositif de manoeuvre selon l'invention d'un bâtiment du genre serre ou autre constitué d'un arbre rotatif de commande, horizontal guidé dans son mouvement de rotation par un ou plusieurs paliers, et accouplé d'une part à un moteur d'actionnement par l'entremise d'un réducteur et d'autre part à au moins une transmission de mouvement solidaire du volet d'aération lequel est articulé à la structure du bâtiment, se caractérise essentiellement en ce qu'il présente au moins un moyen de blocage de l'arbre de commande, fixé de manière rigide à la structure du bâtiment et ce en regard de l'arbre de commande et en ce que l'arbre de commande est monté de manière flottante par rapport à ses paliers de guidage de façon à pouvoir être écarté radialement de ces derniers sous l'effet de l'effort de déplacement que lui imprime la transmission de mouvement lorsque le volet est sollicité dans le sens de l'ouverture par le vent, et pouvoir venir par déplacement radial en éloignement du ou des paliers, en prise le ou les moyens de blocage de façon à être immobilisé en rotation par ce ou ces derniers.

Selon une autre caractéristique de l'invention, chaque moyen de blocage présente deux formes de mâchoires, fixes l'une par rapport à l'autre, disposées en regard l'une de l'autre et formant toutes deux un évasement dans lequel l'arbre est destiné à être bloqué par effet de coin.

Selon une autre caractéristique de l'invention, le dispositif de manoeuvre est doté d'un ou plusieurs organes élastiques prévus pour être comprimés par l'arbre de commande lorsque ce dernier est engagé dans les formes de mâchoire du ou des moyens de blocage, et solliciter radialement ledit arbre dans le sens de son dégagement de ces formes de mâchoire.

Dans la pratique, selon un autre aspect de l'invention, chaque organe élastique sera constitué par un bloc en élastomère.

Selon une autre caractéristique de l'invention, chaque palier de l'arbre de commande est organisé en berceau.

Selon une autre caractéristique de l'invention, chaque palier formant berceau est entre deux flancs parallèles d'un étrier support fixé à la structure du bâtiment, les dits flancs en regard l'un de l'autre présentant chacun une ouverture traversante dans laquelle est engagé et évolue en translation l'arbre de commande lorsque ce dernier est sollicité vers le ou les moyens de blocage ou est ramené vers les paliers de guidage, ledit arbre en position normale d'utilisation étant en appui sur le berceau et étant écarté des rives de chaque ouverture.

Selon encore une autre caractéristique de l'invention, l'un au moins des deux flancs de chaque étrier support est doté d'un moyen de blocage.

Selon encore une autre caractéristique de l'invention, l'ouverture pratiquée dans chaque flanc est sensiblement de forme oblongue et présente un rétrécissement de largeur inférieure au diamètre de l'arbre, ce rétrécissement étant délimité par deux rives inclinées de l'ouverture oblongue, les formes de mâchoires du moyen de blocage étant formées par les deux rives inclinées du rétrécissement.

### Brève description des dessins

D'autres avantages et caractéristiques de l'invention apparaîtront à la lecture de la description d'une forme préférée de réalisation donnée à titre d'exemple non limitatif en se référant aux dessins annexés en lesquels :

- la figure 1 est une vue en perspective d'un dispositif de manoeuvre conforme à l'invention,

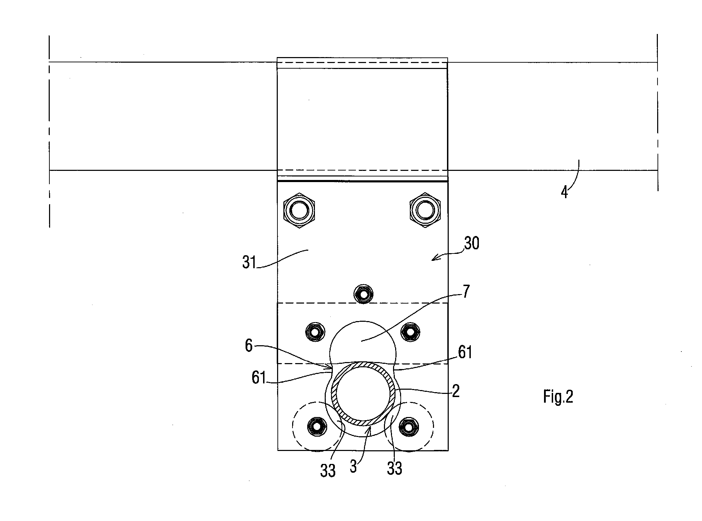

- la figure 2 est une vue de face d'un étrier support, l'arbre de commande étant en position normale d'utilisation,

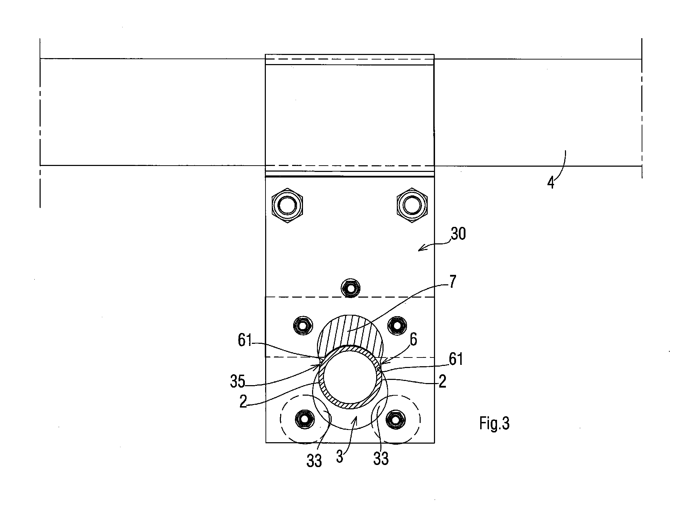

- la figure 3 est une vue de face d'un étrier support, l'arbre de commande étant immobilisé entre les mâchoires du moyen de blocage,

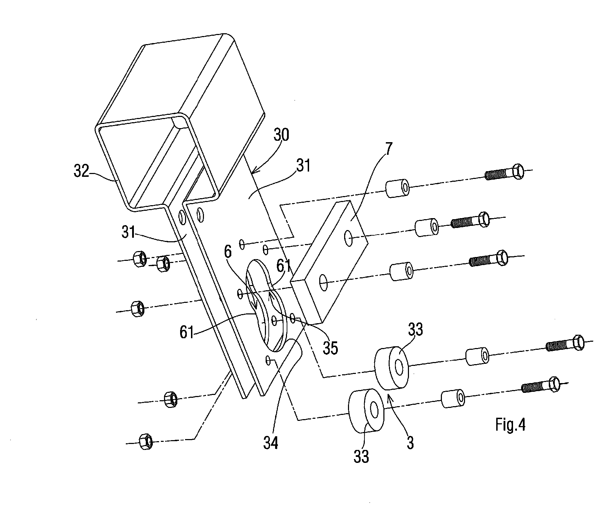

- la figure 4 est une vue en éclaté d'un palier et du support de palier selon une première forme de réalisation,

- la figure 5 est une vue en éclaté d'un palier et du support de palier selon une seconde forme de réalisation.

### Meilleur mode de réalisation de l'invention

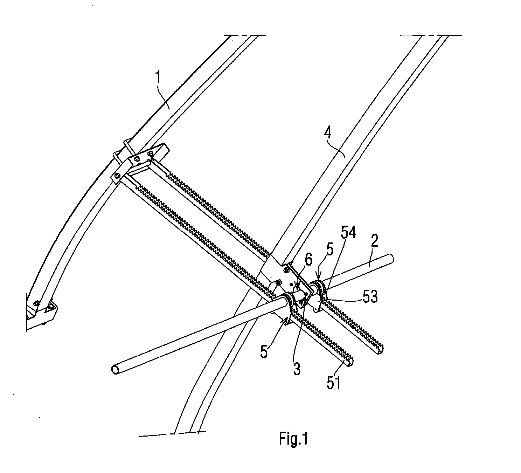

En figure 1 est représenté partiellement un bâtiment, par exemple à usage agricole, constitué d'une structure porteuse recevant une bâche de recouvrement en matière synthétique transparente. Typiquement, la structure de serre est constituée par des arceaux verticaux et par des lisses horizontales fixées aux arceaux. Ce bâtiment est doté d'une ou plusieurs ouvertures d'aération à chacune desquelles est associé un volet d'aération 1 qui peut occuper par rapport à l'ouverture, une position de fermeture totale selon laquelle ladite ouverture est totalement obturée, une position d'ouverture totale selon laquelle l'ouverture est totalement dégagée. Entre ces deux positions extrêmes le volet, le volet peut être disposé selon une position intermédiaire pour obturer partiellement l'ouverture. Habituellement, l'ouverture d'aération est formée entre deux lisses horizontales dont une occupe une position supérieure par rapport à l'autre et le volet d'aération 1 est articulé à l'ossature supérieure. Ce volet 1 comprend une ossature formée de longerons parallèles et de traverses arquées solidarisées à ces longerons. Cette ossature reçoit une bâche de recouvrement en matière transparente. Le volet d'aération 1 est articulé par son ossature à la lisse supérieure de la structure de serre.

Tel que représenté, le dispositif selon l'invention de manoeuvre du volet d'aération 1, comprend un arbre 2 cylindrique rotatif, de commande, horizontal, guidé dans son mouvement de rotation par un ou plusieurs paliers 3 portés par la structure 4 du bâtiment.

L'arbre de commande 2 est accouplé d'une part à un moteur électrique d'actionnement (non représenté) par l'entremise d'un réducteur irréversible (non représenté) et d'autre part à au moins une transmission de mouvement 5 solidaire du volet d'aération 1 lequel est articulé à l'ossature 4 du bâtiment. Dans la pratique sont prévues plusieurs transmissions de mouvement, régulièrement réparties le long de l'arbre 2 et du volet 1 pour transmettre de manière uniforme à l'ensemble du volet 1 le mouvement de commande.

Chaque transmission de mouvement 5 transforme le mouvement de rotation de l'arbre de commande 2 en un mouvement de fermeture ou d'ouverture, communiqué au volet d'aération 1.

L'irréversibilité du réducteur évite que les efforts imprimés par la ou les transmissions de mouvement sur l'arbre de commande 2 ne deviennent moteur et par voie de conséquence entraînent cet arbre en rotation.

Chaque transmission de mouvement 5 pourra être constituée par au moins une crémaillère 51 articulée par une de ses extrémités à un élément de l'ossature du volet d'aération et par au moins un pignon denté 52 fixé tant en rotation et qu'en translation sur l'arbre de manoeuvre 2 et engrené avec la crémaillère 51.

Pour assurer le maintien en prise l'un avec l'autre de la crémaillère 51 et du pignon 52 est prévue une monture 53 engagée autour de la crémaillère 51 et du pignon 52 et dotée d'une piste de guidage et de maintien de la crémaillère. Cette monture 53 est de plus dotée de deux paliers opposés 54 dans lesquels est monté l'arbre de commande 2. Selon une forme pratique d'exécution, la monture est constituée d'une carcasse formant chape en U dont les deux ailes sont percées de part en part et reçoivent chacune dans le perçage formé, le palier de guidage de l'arbre de commande, ce palier pouvant prendre la forme de bague autolubrifiante ou autre. La crémaillère 51 et le pignon 52, comme on le comprend, sont montés entre les deux ailes de la carcasse.

L'intrados de l'âme de la chape reçoit avantageusement la piste de glissement en toute matière appropriée sur laquelle glisse la face dorsale de la crémaillère, cette face dorsale étant celle opposée à la denture de la crémaillère.

Pour minimiser les déformations en flexion de l'arbre de commande 2 sous l'effet des efforts radiaux que lui impriment les transmissions de mouvement 5, ces dernières sont chacune disposées au plus près d'un palier de guidage 3.

Pour équilibrer les efforts, les transmissions de mouvement 5 seront associées par paire à un même palier de guidage et les transmissions de chaque paire seront disposées de part et d'autre de ce palier, leurs crémaillères 51 étant articulées à un même élément d'ossature de volet 1 constitué par exemple par une platine 55 de reprise d'efforts. Cette platine sera fixée par tout moyen connu à l'une des traverses de l'ossature du volet 1.

Conformément à l'invention, le dispositif de manoeuvre présente au moins un moyen de blocage 6 de l'arbre de commande, fixé de manière rigide à l'ossature du bâtiment et ce en regard de l'arbre de commande. Cet arbre de commande 2 est monté de manière flottante par rapport à ses paliers de guidage 3 de façon à pouvoir être écarté radialement de ces derniers sous l'effet de l'effort de déplacement que lui imprime les transmissions de mouvement 5 lorsque le volet 1 est sollicité dans le sens de l'ouverture par le vent, et venir, par déplacement radial, en prise avec des formes de mâchoire 61 que présente le ou les moyens de blocage 6 de façon à être immobilisé en rotation dans ces dernières.

Préférentiellement, chaque palier de guidage 3 de l'arbre de commande 2 est porté par un étrier support 30 fixé à un élément de la structure de bâtiment par exemple un arceau. Cet étrier 30 comprend deux flancs parallèles 31 réunis en partie supérieure par une forme de collier 32 destinée à être engagée autour de l'élément de la structure et y être fixé par serrage. Dans ce but, les deux flancs 31 de la structure, à proximité de la forme de collier 32, sont dotés en regard l'un de l'autre de perçages traversants formant plusieurs alignement de perçage, par exemple au nombre de deux, et à chaque alignement de perçages est associé un boulon de serrage. Par serrage de l'écrou du boulon, les deux flancs 31 sont sollicités l'un vers l'autre et la forme de collier est resserrée sur l'arceau de la structure 4 ce qui assure l'immobilisation de l'étrier support 30. Le palier de guidage est monté entre les deux flancs 31 de l'étrier.

Pour permettre le déplacement radial de l'arbre de commande 2, chaque palier 3 est organisé en berceau. Ce berceau est monté entre deux flancs parallèles 31 de l'étrier support 30 et les deux flancs 31 en regard l'un de l'autre présentent chacun une ouverture traversante 34 dans laquelle est engagé et évolue en translation l'arbre 2 lorsque ce dernier est sollicité vers les moyens de blocage 6 ou est ramené vers ses paliers de guidage 3.

En position normale d'utilisation, l'arbre de commande est en appui sur le berceau et est écarté des rives 31 de chaque ouverture 34.

Selon une première forme de réalisation, le berceau constituant palier 3 comprend deux rouleaux de guidage 33 montés de manière libre en rotation entre les deux flancs parallèles 31 de l'étrier support 30.

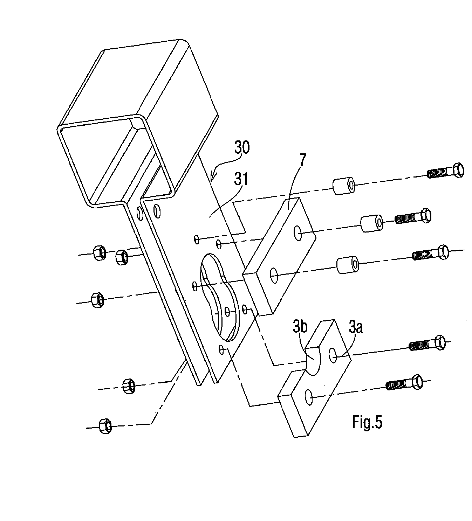

Selon une seconde forme de réalisation, (figure 5) le berceau constituant palier 3 est un élément rigide 3a doté d'une échancrure 3b dans laquelle repose l'arbre de commande 2 en position normale d'utilisation. Dans cette position, l'arbre de commande 2 est freiné en rotation par l'échancrure. Ce freinage en rotation résulte des forces de frottement entre l'arbre de commande 2 et le palier, ce dernier étant constitué en polyéthylène. Cette disposition vise à diminuer l'intensité du couple résistant au niveau du réducteur irréversible, lorsque ce dernier doit assurer l'immobilisation de l'arbre en rotation.

Préférentiellement, chaque ouverture traversante 34 est de forme oblongue, le contour oblong de chaque ouverture étant orienté en sorte que son axe longitudinal soit confondu ou sensiblement confondu avec la direction du déplacement radial de l'arbre de commande 2.

Préférentiellement, l'un au moins des deux flancs 31 de chaque étrier support 30 est doté d'un moyen de blocage 6.

Avantageusement, pour assurer un blocage optimal chaque flanc 31 de l'étrier support 30 sera équipé d'un moyen de blocage 6.

Ce moyen de blocage 6 présente, selon une forme préférée d'exécution, deux formes de mâchoires 61, fixes l'une par rapport à l'autre, disposées en regard l'une de l'autre formant toutes deux un évasement dans lequel l'arbre 2 vient se bloquer par effet de coin.

Une telle disposition présente le grand avantage de la simplicité de réalisation et d'assurer un blocage par adhérence particulièrement efficace.

Les mâchoires 61 d'un même moyen de blocage 6 sont inclinées l'une par rapport à l'autre d'un angle aigu de valeur inférieure à 15 degrés.

Préférentiellement, chaque forme de mâchoire est constituée par une face plane ou courbe du moyen de blocage 6.

Selon cette forme de réalisation, l'ouverture oblongue 34 pratiquée dans chaque flanc 31 de l'étrier support 30, présente un rétrécissement 35 de largeur inférieure au diamètre de l'arbre 2, ce rétrécissement étant délimité par deux rives inclinées de l'ouverture oblongue 34. Les formes de mâchoires 61 du moyen de blocage 6 correspondant, sont ménagées au niveau de ce rétrécissement. Plus précisément, les mâchoires 61 sont formées par les deux rives inclinées délimitant le rétrécissement 35.

Comme on peut le voir, ce rétrécissement 35 est formé à écartement des parties supérieure et inférieure de l'ouverture oblongue 34.

Selon une autre forme de réalisation non représentée, les formes de mâchoires 61 présentent des dents et l'arbre de manoeuvre en regard de chaque forme de mâchoire présente une dentelure prévue pour s'engager dans les dents de la forme de mâchoire lorsque l'arbre est sollicité vers le moyen de blocage.

Ainsi lorsque le volet 1 est sollicité par le vent dans le sens de l'ouverture, les transmissions de mouvement 5, par l'intermédiaire de leurs crémaillères 51 et pignon 52 exercent sur l'arbre de commande 2, en plusieurs points répartis le long de ce dernier, un effort tangentiel sous l'effet duquel ledit arbre de commande 2 est amené à se déplacer radialement dans les ouvertures oblongues traversantes 34 des flancs 31 des étriers support 30. L'irréversibilité du réducteur accouplé à l'arbre de commande 2 interdit toute rotation de ce dernier et par voie de conséquence tout mouvement angulaire du volet d'aération 1 dans le sens de l'ouverture autre que celui permis par la liberté de débattement de l'arbre de commande 2 dans chaque ouverture 34. Ce mouvement angulaire que permet le débattement de l'arbre de commande est limité à quelques fractions de degré.

Le blocage en rotation de l'arbre de commande 2 selon plusieurs points régulièrement répartis présente l'avantage de supprimer ou de très fortement diminuer le moment résultant de torsion au niveau de l'arbre de sortie du réducteur et de fortement diminuer la déformation de l'arbre de commande en torsion.

Une fois que la sollicitation d'engagement de l'arbre de commande 2 dans les moyens 6 cesse, il est nécessaire de dégager l'arbre de commande 2 de ces différents moyens de blocage. À cet effet le dispositif de manoeuvre est doté d'un ou plusieurs organes élastiques 7 prévus pour être comprimés par l'arbre de commande 2 lorsque ce dernier est engagé dans les formes de mâchoire 61 du ou des moyens de blocage 6 et solliciter radialement le dit arbre de commande 2 dans le sens de son dégagement de ces formes de mâchoire. Préférentiellement les organes élastiques sont portés par les étriers 30 et sont constitués chacun par un bloc en élastomère. Ce bloc sera fixé par vis entre les flancs 31 de l'étrier 30.

Un autre avantage de ce bloc est d'éviter tout choc métal contre métal et de réduire fortement le bruit.

Selon une autre forme de réalisation non représentée, les formes de mâchoires 61 présentent des dents et l'arbre de manoeuvre en regard de chaque forme de mâchoire présente une dentelure prévue pour s'engager dans les dents de la forme de mâchoire lorsque l'arbre est sollicité vers le moyen de blocage.

Il va de soi que la présente invention peut recevoir tous aménagements et variantes du domaine des équivalences techniques sans pour autant sortir du cadre du présent brevet.

## Revendications

1. Dispositif de manoeuvre d'un volet d'aération (1) d'un bâtiment du genre serre ou autre constitué d'un arbre rotatif de commande (2), horizontal guidé dans son mouvement de rotation par un ou plusieurs paliers (3), et accouplé d'une part à un moteur d'actionnement par l'entremise d'un réducteur et d'autre part à au moins une transmission (5) de mouvement solidaire du volet d'aération (1) lequel est articulé à la structure (4) du bâtiment, **caractérisé en qu'**il présente au moins un moyen de blocage (6) de l'arbre de commande (2), fixé de manière rigide à la structure (4) du bâtiment et ce en regard de l'arbre de commande (2) et en ce que l'arbre de commande (2) est monté de manière flottante par rapport à ses paliers de guidage (3) de façon à pouvoir être écarté radialement de ces derniers sous l'effet de l'effort de déplacement que lui imprime la transmission de mouvement lorsque le volet (1) est sollicité dans le sens de l'ouverture par le vent, et pouvoir venir par déplacement radial en éloignement du ou des paliers (3), en prise avec le ou les moyens de blocage (6) de façon à être immobilisé en rotation par ce ou ces derniers.

2. Dispositif de manoeuvre selon la revendication 1, **caractérisé en ce que** chaque moyen de blocage (6) présente deux formes de mâchoires (61), fixes l'une par rapport à l'autre, disposées en regard l'une de l'autre et formant toutes deux un évasement dans lequel l'arbre (2) est destiné à être bloqué par effet de coin.

3. Dispositif de manoeuvre selon la revendication précédente, **caractérisé en ce que** les mâchoires d'un même moyen de blocage (6) sont inclinées l'une par rapport à l'autre d'un angle aigu de valeur inférieure à 15 degrés.

4. Dispositif de manoeuvre selon la revendication 2 ou la revendication 3, **caractérisé en ce que** chaque forme de mâchoire est constituée par une face plane ou courbe du moyen de blocage (6).

5. Dispositif de manoeuvre selon l'une quelconque des revendications précédentes, **caractérisé en ce qu'**il est doté d'un ou plusieurs organes élastiques (7) prévu(s) pour être comprimés par l'arbre de commande (2) lorsque ce dernier est engagé dans les formes de mâchoire (61) du ou des moyens de blocage (6), et solliciter radialement ledit arbre (2) dans le sens de son dégagement de ces formes de mâchoire (61).

6. Dispositif de manoeuvre selon la revendication 5, **caractérisé en ce que** chaque organe élastique (7) est constitué par un bloc en élastomère.

7. Dispositif de manoeuvre selon l'une quelconque des revendications précédentes, **caractérisé en ce que** chaque palier (3) de l'arbre de commande (2) est organisé en berceau.

8. Dispositif de manoeuvre selon la revendication 7, **caractérisé en ce que** le berceau est monté entre deux flancs parallèles (31) d'un étrier support (30) fixé à la structure du bâtiment, les dits flancs (30) en regard l'un de l'autre présentant chacun une ouverture traversante (34) dans laquelle est engagé et évolue en translation l'arbre de commande (2) lorsque ce dernier est sollicité vers le ou les moyens de blocage (6) ou est ramené vers les paliers de guidage (3), ledit arbre (2) en position normale d'utilisation étant en appui sur le berceau et étant écarté des rives de chaque ouverture (34).

9. Dispositif de manoeuvre selon la revendication 8, **caractérisé en ce que** le berceau constituant palier (3) est un élément rigide doté d'une échancrure dans laquelle repose l'arbre de commande (2) en position normale d'utilisation, ledit arbre (2) étant freiné en rotation par ladite échancrure.

10. Dispositif de manoeuvre selon la revendication 8, **caractérisé en ce que** le berceau constituant palier (3) est un élément rigide doté d'une échancrure dans laquelle repose l'arbre de commande (2) en position normale d'utilisation, ledit arbre (2) étant freiné en rotation par ladite échancrure.

11. Dispositif de manoeuvre selon l'une quelconque des revendications 8 à 10, **caractérisé en ce que** l'un au moins des deux flancs (31) de chaque étrier support (30) est doté d'un moyen de blocage (6).

12. Dispositif de manoeuvre selon la revendication 11 **caractérisé que** l'ouverture traversante (34) pratiquée dans chaque flanc (30) est sensiblement de forme oblongue et présente un rétrécissement (35) de largeur inférieure au diamètre de l'arbre de commande (2), ce rétrécissement (35) étant délimité par deux rives inclinées de l'ouverture oblongue (34), les formes de mâchoires (61) du moyen de blocage (6) étant formées par les deux rives inclinées du rétrécissement.

13. Dispositif de manoeuvre selon les revendications 5 et 8 prises ensemble, **caractérisé en ce que** l'organe élastique (7) est monté entre les flancs (31) de l'étrier (30).

14. Dispositif de blocage selon la revendication 2, **caractérisé en ce que** les formes de mâchoires (61) présentent des dents et que l'arbre de commande (2), en regard de chaque forme de mâchoire (61) présente une dentelure prévue pour s'engager dans les dents de chaque forme de mâchoire lorsqu'il est sollicité vers le moyen de blocage (6).
